# EUROPEAN PATENT SPECIFICATION

(11) **EP 2 237 482 B1**
(45) Date of publication and mention of the grant of the patent: **30.10.2013**
(21) Application number: 09305278.5
(22) Date of filing: 02.04.2009
(51) Int. Cl.: H04L 12/26

(54) **Method for preparing a data frame for checking continuity defaults in a Passive Optical Network (PON)**
Verfahren zur Herstellung eines Datenrahmens zur Prüfung von Kontinuitätsstandards in einem passiven optischen Netzwerk
Procédé pour la préparation d'un cadre de données pour contrôler les défauts de continuité dans un réseau optique passif (PON)

(43) Date of publication of application: 06.10.2010
(73) Proprietor: Mitsubishi Electric Corporation, Tokyo 100-8310 (JP); Mitsubishi Electric R&D Centre Europe B.V., 1119 NS Schiphol Rijk Amsterdam (NL)
(72) Inventor: Lavillonniere, Eric, 35530 Noyal Sur Vilaine (FR); Weppe, Olivier, 35690 Acigne (FR)
(74) Representative: Blot, Philippe Robert Emile

(56) References cited:
- GEHRKE G ET AL: "QoE Estimation of compound services in significance-aware packet networks" BELL LABS TECHNICAL JOURNAL, WILEY, CA, US, vol. 13, no. 3, 21 September 2008 (2008-09-21), pages 95-109, XP001518484 ISSN: 1089-7089
- ITU: "Draft ITU-T Recommendation Y.1563 (ex Y.ETHperf) LC Comment Res 02. Ethernet frame transfer and availability performance"[Online] December 2008 (2008-12), pages 1-43, XP002543048 Retrieved from the Internet: URL:http://wftp3.itu.int/packet/Dec2008_Q1 7/Y.1563_LC_Res02.doc> [retrieved on 2009-08-25]
- ITU: "Comments on Y.1731 PM" LIAISON STATEMENT, [Online] 11 December 2008 (2008-12-11), pages 1-3, XP002543049 Retrieved from the Internet: URL:http://wftp3.itu.int/packet/Dec2008_Q1 7/OUT-docs/LS_SG13_Y1731.doc> [retrieved on 2009-08-25]

## Description

The present invention relates to a method for checking continuity defaults in a transmission network, in particular a Passive Optical Network (PON), and a transmission network wherein the method is implemented.

Passive Optical Networks are well known as being one among the two architectures of the access part of optical networks. This architecture is also called Point to Multipoint architecture.

Protection mechanisms for protecting a Passive Optical Network are necessary to ensure a high quality of service, in particular a good availability of services for some users who subscribed such a quality of service with protection.

The document "QoE Estimation of Compound services in significance-aware packet networks" from Gehrke G. and al., Bell Labs Journal, Wiley, CA. Vol. 13, n°3, and the document from ITU "Draft ITU-T Recommendation Y.1563 LC comment Res. 02 Ethernet frame transfer and availability performance" December 2008 describe examples of such protection mechanisms.

One approach is to implement protection mechanisms as defined by international Telecommunication Union - Telecommunication (ITU-T) recommendations which are defined at a rather low level by embedding specific data frames inside the Passive Optical Network protocol.

This protection mechanism well suited to protect Passive Optical Networks requires that the Passive Optical Network equipments, for example Optical Network Units (ONUs) and Optical Line Terminations (OLTs), incorporate specific electronic parts. It will be needed to develop either two lines of products for unprotected equipments and protected equipments, or a single line of products wherein all equipments contain the implemented protection mechanism. In both cases this leads to increase hardware complexity of the equipments (ONUs and OLTs) and accordingly the cost of the Passive Optical Network.

A second approach is to implement the protection function outside the PON equipments by using an Ethernet mechanism built at the second level and installed only for the protected equipments.

This Ethernet mechanism is defined in the ITU-T recommendation G.8031/Y.1342 (Ethernet Protection Switching) and in the ITU-T recommendation Y 1731 (OAM Functions and Mechanisms for Ethernet base Network). According to the Ethernet mechanism some data entities referred as CCM data entities, CCM standing for Continuity Check Message, are added in the flow of data on the emitter indicating a number of user data entities sent before the CCM. On the receiver side, the number of user data entities received is checked against a reference count contained in the CCM data entities.

However, Passive Optical Network systems have some Quality of Service (QoS) management mechanism which can reorder the sequencing of the user data entities. When some reordering happens in a Passive Optical Network system, the Ethernet mechanism is not applicable. Because of the reordering, some or all user data entities previously embedded within two CCM data entities can arrive before or after their embedding CCM data entities.

The technical problem is to determine a method for checking continuity of a Passive Optical Network implemented outside the conventional Passive Optical Network equipments (Optical Network Units and Optical Line Terminations) that operates regardless of the reordering performed on user data entities by the Quality of Service management mechanism.

The invention accordingly relates to a method for preparing and transmitting a data frame in a transmission network according to claim 1.

The invention also relates to a method for checking continuity in a transmission network according to claim 7.

The invention also relates to a transmission network according to claim 16.

The invention also relates also to a computer program product according to claim 20.

A better understanding of the invention will be facilitated by reading the following description, which is given solely by way of examples and with reference to drawings, in which:
- Figure 1 is a first embodiment of a transmission network implementing the method of the invention.
- Figure 2 is a flow chart of the method for checking continuity implemented in the transmission network of Figure 1;
- Figure 3 is a time chart of uninterrupted continuous data flows having the same user data packets and resulting from steps of Figure 2, a first data flow with one data frame viewed before the data order rearrangement unit at the emitter, a second data flow divided within the data order rearrangement unit into three data streams, each stream having a corresponding data frame and a third data flow having one data frame viewed at the output of the emitter as a prepared data frame;
- Figure 4 is a flow chart of the step for checking continuity carried out at the receiver level as a part of the flow chart described in Figure 2;
- Figure 5 is a second embodiment of a transmission system implementing the method of the invention;
- Figure 6 is a flow chart of the method for checking continuity implemented in the transmission system of the Figure 5;
- Figure 7 is a flow chart of a variant of the method for checking continuity described in Figure 6.
- Figure 8 is a Passive Optical Network view wherein the method for checking continuity is implemented.

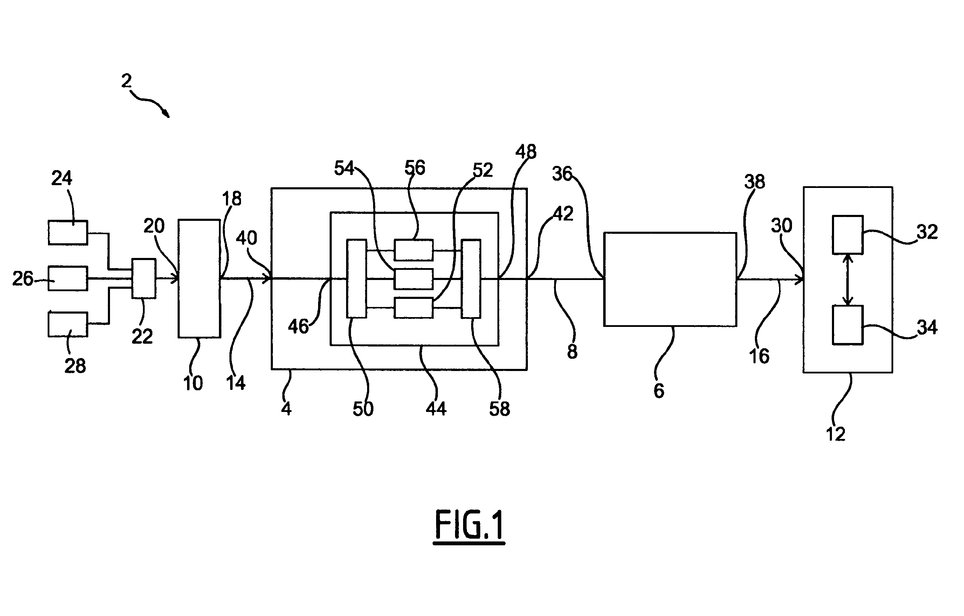

According to the Figure 1, a transmission system 2 comprises at least one emitter 4, only one emitter 4 being here shown, and at least one receiver 6, only one receiver 6 being here shown, the emitter 4 and the receiver 6 being connected between each other by a physical link 8 or transmission line.

The transmission system 2 also comprises a protection emitter unit 10 and a protection receiver unit 12 connected respectively to the emitter 4 and the receiver 6 through respective data links 14 and 16.

The protection emitter unit 10 has an output terminal port 18 connected to the emitter 4 and an input terminal port 20.

The input terminal port 20 of the protection emitter unit 10 is for example connected to the single output of a switching unit 22 connected at input to three communication data user terminals 24, 26, 28.

The protection emitter unit 10 is able to receive, here from the switching unit 22, a stream of user data packets Q(i) arranged in series, i being an integer for identifying one user data packet.

The protection emitter 10 is able to cut the stream of user data packets Q(i) into several sets S(g) of user data packets Q(i,g), each set S(g) being identified by a different group identifier g.

The cutting depends either on a predetermined volume of data received at its input terminal 20 or on a predetermined period of time or both.

The protection emitter unit 10 is also able to add signalling data before, after or between the user data packets Q(i,g) of a same set S(g) and to send to the emitter 4 these user data packets Q(i, g) forming a set S(g) with signalling data added therefore.

Each set S(g) of user data packets Q(i,g) comprises user data packets Q(i,g, QoS), each user data packet being associated to a level of Quality of Service identified by QoS.

Each user data packet refers to a service such as for example a video service, a phone call service, or an interactive data exchange service.

A type of service is related to a specific Quality of Service (QoS), and more specifically due to real time transmission requirements, some services as video data packets, phone data packets have a higher level of priority for transmission than in the case of a simple file data transfer which can afford greater variations of time delay between subsequent packets.

Here, as a specific example, the quality of service is limited to a level of priority but the concept of quality of service is broader in general case.

Therefore, a set S(g) of user data packets is either empty or comprises at least one user data Q(i,g,p) packet subsequently transmitted with one or several different priority levels p.

The protection emitter unit 10 is able to transmit to the emitter 4 the cut set S(g) of user data packets with their corresponding added signalling data.

The protection receiver unit 12 has an input terminal 30 connected to the receiver 6 and is able to receive the user data packets Q(i) and the signalling data transmitted by the protection emitter unit 10 through the emitter 4 and the receiver 6.

The protection receiver unit 12 comprises processing means, for example a microprocessor 32, with a memory 34, for processing the data packets Q(i) and the signalling data.

The receiver 6 has a first terminal 36 connected to the emitter 4 through the transmission line 8 and a second terminal 38 connected to the terminal 30 of the protection receiver unit 12.

The emitter 4 has a first terminal 40 connected to the terminal 18 of the protection emitter unit 10 and a second terminal 42 connected to the first terminal 36 of the receiver 6.

The emitter 4 comprises a data order rearrangement unit 44 connected by an input 46 to the first terminal 40 of the emitter and by an output 48 to second terminal 42 of the emitter.

The data order rearrangement unit 44 is able to receive from the protection emitter unit 10 the user data packets Q(i,g,p) cut into sets S(g) with the corresponding added signalling data and to rearrange the data order according to their associated quality of service QoS.

The data order rearrangement unit 44, in this example is limited to rearrange the data according levels of priority and is therefore a priority management unit.

The data order rearrangement unit 44 comprises a de-multiplexing unit 50, connected to the first terminal 46 and able to de-multiplex received data from the emitter protection unit 10 into a set of buffers 52, 54, 56, here three buffers, that constitute different queuing files with a First in First out data structure and a level of priority p assigned here amongst three levels of priority ranging from 1 to 3.

The first queuing file buffer 52 shown at a bottom level in the Figure 1 is assigned to the lower level of priority equal to 1.

The second queuing file buffer 54 shown at an intermediate level in the Figure 1 is assigned to an intermediate level of priority equal to 2.

The third queuing file buffer 56 shown at a top level in the Figure 1 is assigned to a high level of priority equal to 3. Here, the level of priority 3 is the highest level of priority and is the maximum number among all the priority level integers. The maximum number is designated in the general case by pmax.

The data order rearrangement unit 44 also comprises a multiplexing unit 58 connected at its input to each respective output of the queuing file buffers 52, 54, 56 and at its output to the second terminal 48 of the data order rearrangement unit 44.

As an example, the multiplexing unit 58 is able to rearrange according a decreasing order of priority level the data by outputting all the data contained in one buffer, the buffer having a higher level of priority being unloaded first. Here the third queuing file buffer 56 is emptied first followed by the second queuing file buffer 54 and lastly the first queuing file buffer 52 is emptied.

In a variant, the data order rearrangement unit 44 is able to carry out more complex rearrangement algorithm based on different parameters than the priority levels, and is different from a server with queuing files in parallel.

For example, the data order rearrangement unit is a server with queuing files in parallel, a different priority level being assigned to each queuing file, each file being unloaded at a respective different rate proportional to its assigned priority level, the number of packets involved depending on the throughput at the output.

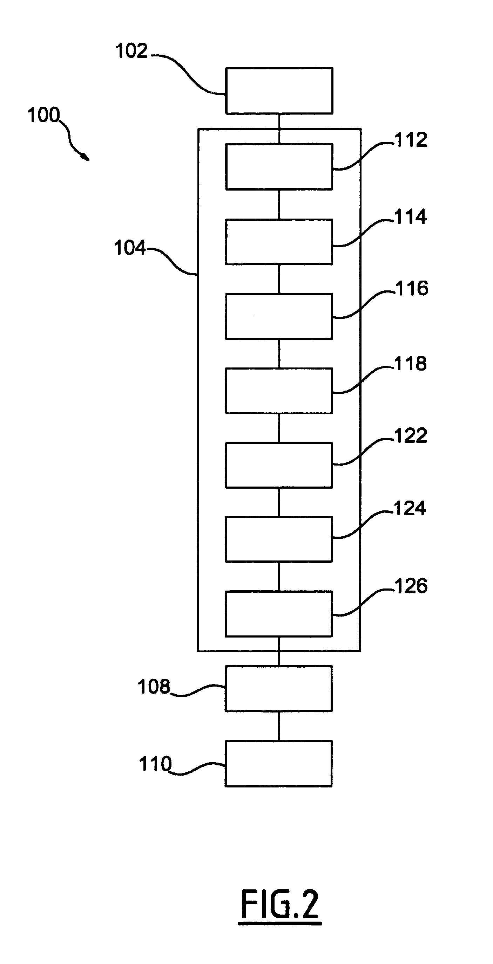

According to figure 2, the method for checking continuity comprises a set 100 of steps.

The set 100 of steps comprises an initialization step 102, a set 104 of subsequent steps for preparing a data frame outputted at the output 42 of the emitter 4, a checking continuity step 108 comprising at least one reporting step of continuity default status on a regularly time basis, a step 110 for activating a switch over to a redundant transmission path in case of a detected continuity default. The set 104 comprises the subsequent steps 112, 114, 116, 118, 122, 124, 126.

In the initialization step 102, before starting any transmission of a packet Q(i,g,p) from the protection emitter unit 10, a first predetermined reference number contained is set in an emitting user counter UCE and a second predetermined reference number is set in receiving user counter UCR. Here the emitting user counter UCE and the receiving user counter UCR are set at a same value, for example zero,

In the subsequent step 112, the emitter protection unit 10 cuts on a periodic time basis or a data volume basis the received user data packets Q(i) if any into sets S(g) of subsequent data packets Q(i,g), each cut set S(g) being empty or formed by at least one packet Q(i, g) and each packet Q(i, g) of a same set S(g) is associated to a priority level p amongst a set of at least two priority levels.

Then, in the step 114, for a current set S(g), the emitter protection unit 10 provides a counting marker C(g) containing the total number of user data packets of the set S(g) counted by the emitting user counter UCE.

In the following step 116, the emitter protection unit 10 forms a group G(g) of signalling elements associated to the current set S(g) and comprising the counting marker C(g) followed by at least two priority level markers M(g, p), each priority level marker M(g, p) containing the same group identifier g and a respective associated priority level p, the highest priority level being equal to the integer pmax.

All the markers also contain here an emitter identifier e assigned to the related emitter 4.

In the subsequent step 118, the emitter protection unit 10 transmits the set S(g) of user data packets Q(i, g, p) with its following signalling data G(g) to the emitter 4.

For each set S(g) followed by its corresponding group G(g), the data order rearrangement unit 44 carries out the following set of steps.

Firstly, in the step 122 the de-multiplexing unit 50 inputs into the queuing file buffer F(pmax) with highest priority level pmax, firstly the counting marker C(g) and lastly the level priority marker M(g, pmax) corresponding to the set S(g) and to the highest level of priority.

In the subsequent step 124, for each level of priority p lower than the highest level of priority pmax, the de-multiplexing unit 50 inputs into the respective queuing file buffer F(p) corresponding to the priority level p, firstly the packets Q(i,g, p) of the set S(g)) if any with priority p without changing their sequencing order exhibited at the input of the de-multiplexing unit 50 and lastly the level priority marker M(g, p).

As an example, in the subsequent step 126, the multiplexing unit 58 multiplexes the serially arranged data contained in the queuing files buffer F(p) according to the decreasing order of the priority levels p. The data from the buffer with the highest priority level are outputted firstly, followed by the data from the buffers ranged according decreasing order of the related priority levels and transmitted into the transmission line 8. Thus an outputted frame Fr(g) is obtained.

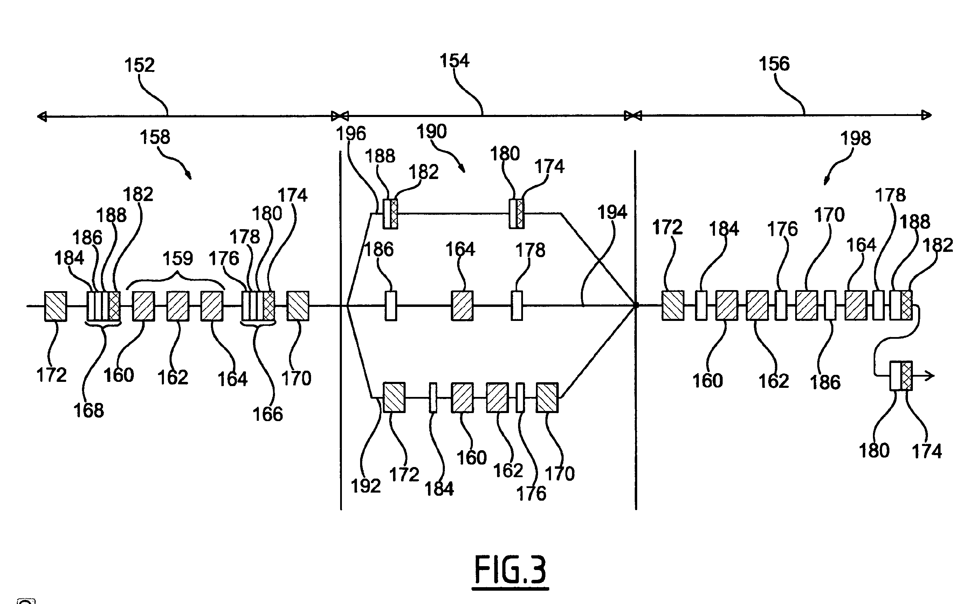

According to the figure 3, an example of the processing of a set S(g) is shown at three stages 152, 154, 156 corresponding for a first stage 152 to the data observed at the output 18 of the protection emitter unit 10 after the step 118, for a second stage 154 to the data observed at the queuing file buffers level after the step 124, for a third stage 156 to the data observed at the output terminal 42 of the emitter 4 after the step 126.

The group identifier g is the identifier assigned to the current set group 159, G(g) corresponding to the current set S(g).

In the first stage 152, a first data frame 158 of data arranged in series comprises a current set 159, or S(g) of three subsequent user data packets 160, 162,164 preceded by a previous group 166, G(g-1), corresponding to a previous set S(g-1) partially shown in the figure 3, and followed by a group 168, G(g) corresponding to the current set 159 or S(g). The first data frame 158 also comprises as an example two extra user data packets 170, 172 that do not belong to the current set 159, the first one 170 located before the previous group 166 possibly belonging to the previous set S(g-1))and the second one 172 located after the current group 168 possibly belonging to a following set S(g+1).

The current set 159 of data exhibits in this example the user data packet 164 associated to an intermediate priority level equal to 2 and the two user data packets 160, 162 associated to a lowest priority level equal to 1.

The previous group 166, G(g-1) comprises a counting marker 174 preceded by three priority level markers 176, 178, 180, the first priority level marker 176 corresponding to the priority level equal to 1, the second priority level marker 178 corresponding to the priority level equal to 2, the third priority level marker 180 corresponding to the priority level equal to 3.

The current group 168, or G(g) comprises a counting marker 182 or C(g) followed by three priority level markers 184, 186, 188, the first priority level marker 184 or M(g, 1) corresponding to the priority level equal to 1, the second priority level marker 186 or M(g, 2) corresponding to the priority level equal to 2, the third priority level marker 188 M(g, 3) corresponding to the priority level equal to 3.

The counting marker 174 and each priority level marker 176, 178, 180 contain the same group identifier g-1 and the emitter identifier e of the emitter 4.

The counting marker 182 and each priority level marker 184, 186, 188 contain the same group identifier g and the emitter identifier e of the emitter 4.

In the second stage 154, a second data frame 190 corresponding to the first data frame 158 is distributed in parallel into three queuing files data frames 192, 194, 196, the queuing file data frames 192, 194, 196 being respectively contained within the queuing file buffers 52, 54, 56 of Figure 1.

In the first queuing file data frame 192 corresponding to the lowest priority level 1, the extra user data packet 170, the following first priority level marker 176, the following two user data packets 160, 162 of the group 159, the following first priority level marker 184, the following extra user data packet 172 are arranged in series.

In the second queuing file data frame 194 corresponding to the intermediate priority level 2, the following priority level marker 178 corresponding to the previous set S(g-1), the following user data packet 164 of the group 159 or G(g) with a level priority equal to 2, the following priority level marker 186 corresponding to the group 159 are arranged in series.

In the third queuing file data frame 196 corresponding to the highest priority level 3 no user data packet are contained in this example. However, the third queuing file data frame may contain user data packets. Here the third queuing file data frame contains only the counting marker 174, C(g-1) corresponding to the previous set S(g-1) followed by the third priority level marker 180, M(g-1, 3) corresponding to the set S(g-1) and then the counting marker 182, C(g) followed by the third priority level marker 188, M(g, 3) corresponding to the current set 159.

In the third stage 156, the third data frame 198 comprises the data of the second data frame 190 arranged in series at the output 42 of the emitter 4.

The third data frame 198 comprises arranged in series, the counting marker 174, C(g-1), the following third priority level marker 180 or M(3, g-1), the following counting marker 182, C(g), the following third priority level marker 188, M(3,g), the following second priority level marker 178, M(2,g-1), the following user data packet 164 with intermediate priority level equal to 2, the following second priority level marker 186, M(2,g), the following first extra user data packet 170, the following first priority level marker 176, M(1,g-1), the following two user data packets 162, 160 of the set 159 with the lowest priority level 1, the following first priority level marker 184, M(1, g) and the following second extra user data packet 172.

In a variant, the method described in Figure 2 and Figure 3 is carried out in a transmission system comprising at least two emitters, each emitter being identified by its own emitter identifier e.

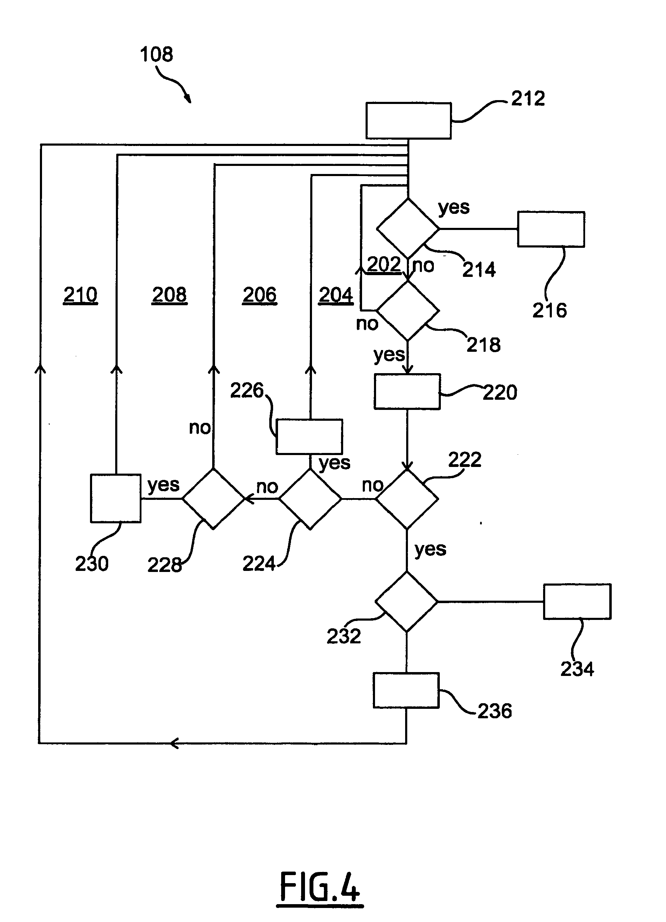

According to figure 4, the checking continuity step 108 comprises a set of steps arranged in five loops 202, 204, 206, 208, 210.

The step 108 is carried out for at least one emitter 4, each emitter being identified by its own different identifier e.

Following a starting step 212, in a first step 214 of the first loop 202, the protection receiver unit 12 measures for each emitter 4 identified by e, the elapsed time since the last corresponding group G(g-1, e) reception and compares the measured elapsed time with a predetermined timeout value Tout.

If the measured elapsed time is higher than the predetermined timeout value Tout, in a reporting step 216, a transmission problem related to a continuity default between the emitter 4 identified by e and the receiver is indicated to a protection switch over control unit for further action namely a switch to a backup link.

If the measured elapsed time is lower than the predetermined timeout value Tout, in a second step 218 of the first loop 202, the protection receiver unit 12 checks whether new available data have been received.

If no available data have been received, the step 108 continues by a jumping to the step 214.

Thus, the first loop comprises the steps 214 and 218.

If available data have been received, in a following step 220 of the second loop 204 embedding the first loop 202, the received data are stored in the memory 34 and classified amongst the user data packets and the elements, the elements comprising the respective counting marker and the priority level markers related to each emitter identified by e.

In a subsequent step 222 of the second loop 204, the protection receiver unit 12 searches for each emitter 4 identified by e whether the last available data received is a last element of the group G(g, e), namely one marker among the priority level markers M(p, g, e) or the counting marker C(g, e) related to the group G(g, e) containing the corresponding identifier g and related to the emitter identifier e.

If the last available received data is not a last element of a group G(g, e), the step 108 continues to a following step 224 of the second loop 204, wherein the receiver protection unit 12 checks whether the last received available data is an element of a group G(g, e).

If the last received available data is an element of the group G(g, e), in a step 226 of the second loop 204, the protection receiver unit 12 determines the group identifier g of the element and stores the element in a group class corresponding to the identifier g and the emitter identifier e. Then the method jumps to the step 214.

Thus the second loop 204 comprises the steps 214, 218, 220, 222, 224 and 226.

If the last received element is not a an element of a group G(g, e), in a further step 228 of the third loop 206 embedding the second loop 204, the protection receiver unit 12 checks whether the last received available data is a user data packet.

If the last received available data is not a user data packet, then the step 108 continues to the step 214.

Thus, the third loop comprises the steps 214, 218, 220, 222, 224, 226 and 228.

If the last received available data is a user data packet, in a step 230 of the fourth loop 208 embedding the thirst loop 206, the receiving user counter UCR is incremented by one unity.

If the last available received data is a last element of a group G(g, e), the step 108 continues to a second continuity testing step 232 of the fifth loop 210 embedding the fourth loop 208.

In the second continuity step 232, the protection receiver unit 12 determines the total number of user data packets belonging to the set S(g, e) associated to the emitter identified by e from the counting marker C(g, e). Then, In the same step 232, the protection receiver unit 12 calculates the difference between the current value of the receiving user data counter UCR and the total number of user data packets belonging to the set S(g, e). In the same step 232, a test is performed on the sign of this difference.

When the difference is lower than zero, namely the current receiving user counter UCR is lower than the total number of user data packets belonging to the set S(g, e), a transmission problem is reported in a step 234.

When the difference is greater or equal to zero, then in a step 236 of the fifth loop 210, the receiving user counter UCR is updated by inputting the calculated difference at step 232 as the updated value.

The step 108 continues by jumping to step 214.

Thus, the fifth loop 210 comprises the steps 214, 218, 220, 222, 232, 236.

The determined relative position of each priority level marker to their corresponding user data packets, namely a posterior position, enables to track the actual transmission of the user data packets belonging to a same group and emitted by a same emitter regardless of a priority rearrangement of the packets and to count these packets as correctly transmitted through the line to the receiver upon the corresponding counter regardless of its position in the flow of data received.

With the aid of the elements of the groups, continuity checking is performed not only regardless of any priority rearrangement performed by the emitter but also regardless of any extra data packets inserted during transmission.

The checking continuity process does not need the stringent and complex requirements of a data or data packet integrity monitoring but is rather a fuzzy-like control of the flow of data expected to be transmitted through the physical link or transmission line.

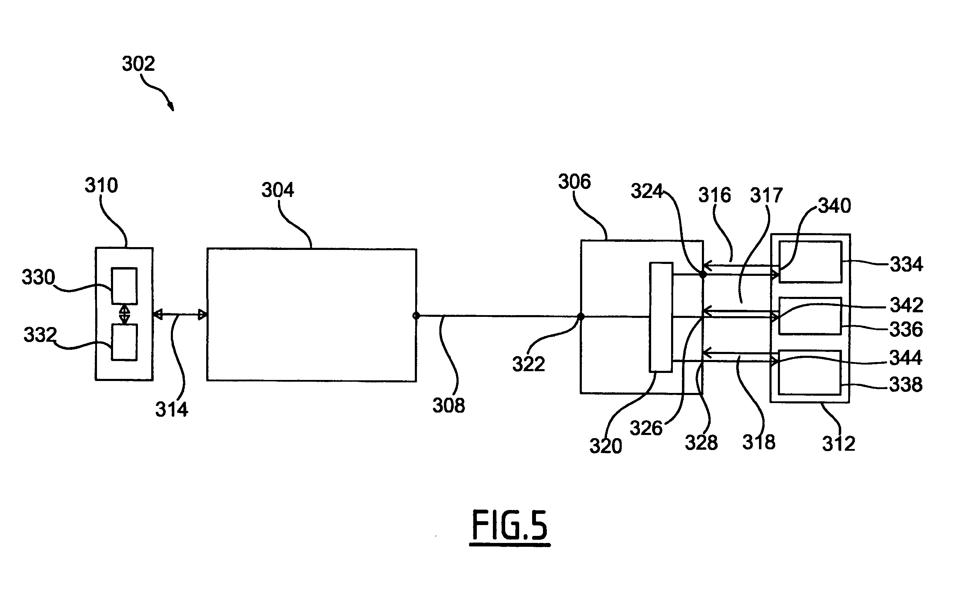

According to the figure 5, a second embodiment 302 of the transmission system is shown. The transmission system 302 comprises at least one emitter 304, only one emitter 304 being here shown and at least one receiver 306, only one receiver 306 being here shown, the emitter 304 and the receiver 306 being connected between each other by a physical link 308.

The transmission system 302 also comprises a protection emitter unit 310 and a protection receiver unit 312 connected respectively to the emitter 304 and the receiver 306 through one bidirectional data link 314 and tree bidirectional links 316, 317, 318.

The emitter 304 has the same structure as the emitter 4 of Figure 1.

The receiver 306 is based on the receiver 6 of Figure 1 and further comprises within a single unit 320 a receiver forward link de-multiplexer unit and a receiver return link multiplexer unit.

The receiver 306 has a receiver input terminal 322 used both for a forward link and a return link and three receiver output terminals 324, 326, 328, each received output terminals 324, 326, 328 being respectively used for a different bidirectional link 316, 317, 318. Each receiver output terminal 324, 326, 328 is associated to a different parameter θ1, θ2, θ3. Here, the output terminals 324, 326, 328 correspond respectively to the parameters θ1, θ2, θ3.

The parameters θ1, θ2, θ3 are for example different services, or different qualities of service or destination addresses of different data terminals.

The protection emitter unit 310 and the emitter 304 are able to carry out the same steps 112, 114, 116, 118, 120, 122, 124, 126 of Figure 2.

The protection emitter unit 310 comprises a processing unit for example a microprocessor 330 with a memory 332 able to perform the same tasks as ones performed by the receiver protection unit 12 of Figure 1.

The protection receiver unit 312 comprises three separate protection receiver subunits 334, 336, 338 not interconnected having one respective terminal port 340, 342, 344 used respectively for one bidirectional link 316, 317, 318 and respectively connected to one receiver output terminal 324, 326, 328.

Each terminal port 340, 342, 344 of the protection receiver unit 312 is able to receive separately the data, such as user data packets, quality of service markers and counting markers, corresponding to a same respective parameter θ 1, θ2, θ3.

The protection receiver unit 312 is able to send back to the protection emitter 310 through a set of return links all the markers and user data packets sent previously from the protection emitter unit 310.

In a variant, the protection receiver unit 312 is able to, after receiving at each subunit 334, 336, 338 the user data packets and markers associated to one respective different parameter θ1, θ2, θ3, to determine separately the values of different user data partial counters UCR(θ1), UCR(θ2), UCR(θ2) by counting and updating for each partial receiving user counter UCR(θ1), UCR(θ2), UCR(θ2) the number of user data packets received by the protection receiver unit 312 and related to a same parameter θ1, θ2, θ3.

Each subunit 334, 336, 338 of the protection receiver unit 312 is also able to send back to the emitter protection unit 310 the values of all the receiving user partial counter UCR(θ1), UCR(θ2), UCR(θ2).

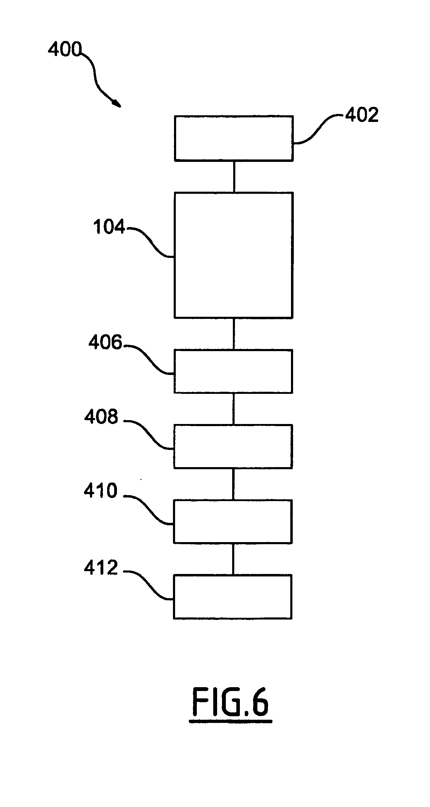

According to the Figure 6, the method carried out by the second embodiment of the transmission system of Figure 5 comprises a set 400 of subsequent steps.

In a first initialization step 402, the emitting user counter UCE and the receiving user counter UCR implemented within the emitter protection unit 310 are set at a same value equal here to zero.

The emitting user counter UCE is the same counter as one implemented in the emitter protection unit 10 of Figure 1. The emitting user counter counts for one associated emitter 304 the data of a same cut set S(g, e) and is set again to zero at the start of a following set S(g, e).

The receiving user counter UCR is the same counter as one implemented in the receiver protection unit 12 of Figure 1. The receiving user counter UCR counts the user data packets sent back from the protection receiver unit 12 through the receiver 306 and the emitter 304.

Then, the same set 104 of steps of Figure 2 is carried out by the protection emitter unit 310 and the emitter 304.

In a following step 406, the received data at the input terminal 322 of the receiver 306 are de-multiplexed into different data streams related to a different parameter θ1, θ2, θ3. The respective data streams are outputted at the output terminals 324, 326, 328 of the receiver 306 and transmitted to the protection receiver unit 312.

In a subsequent step 408, all the data, including markers and user data packets received by the protection receiver unit 312 are sent back to the protection emitter unit 310 through the receiver 306 and the emitter 304 regardless of their receiving subunits 334, 336, 338.

Then, in a step 410 the data received from the protection receiver unit 312 are processed by the emitter protection unit 310 in the same way as described by the steps for continuity checking described in figure 4.

When a continuity default is detected, activating of a switch over to a redundant transmission path is carried out in a step 412.

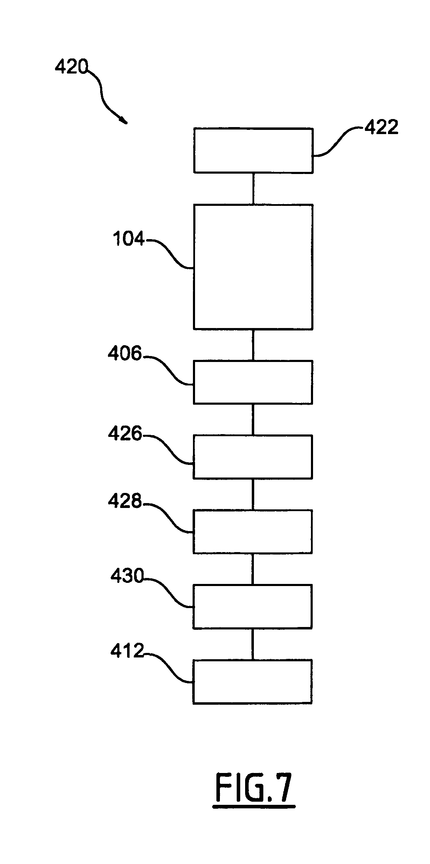

According to Figure 7, the method carried out by the variant of the second embodiment of the transmission system of Figure 5 comprises a set 420 of subsequent steps.

In a first initialization step 422, the emitting user counter UCE implemented within the receiver protection unit 310, the receiving user counter UCR implemented within the emitter protection unit 310, and the three receiving user data partial counters UCR(1), UCR(2), UCR(3) implemented within the receiver protection unit 312 are set at a same value equal here to zero.

Then, the same set 104 of steps of Figure 2 is carried out by the protection emitter unit 310 and the emitter 304.

Then, the same step 406 of Figure 6 is carried out by the receiver 306.

In a subsequent step 426, the protection receiver unit 312, after receiving at each subunit 334, 336, 338 the user data packets and markers associated to one different parameter θ1, θ2, θ3, determines separately the values of the different user data partial counters UCR(θ1), UCR(θ2), UCR(θ3).

Each user data partial counter UCR(θ1), UCR(θ2), UCR(θ3) is incremented when its corresponding subunit level 334, 336, 338 receives a new user data packet and is reset to zero when a Quality of Service marker is received by the corresponding subunit level 334, 336, 338.

In the same step 426, the protection receiver unit 312 sends back to the emitter protection unit 310 through the receiver 306 and the emitter 304 the value of the user data partial counter reached before its reset to zero when a quality of service marker has been detected in its corresponding subunit, every quality of service marker and every counting marker when received but not the user data packets.

Then, in a step 428, the data received from the protection receiver unit 312 are processed by the emitter protection unit 310.

In the step 428, the same steps 214, 216, 218 as ones of Figure 4 are carried out by the emitter protection unit 310.

In the same step 428, if available data have been received, the received data are stored in the memory 332 and classified amongst the user data partial counter value and the elements, the elements comprising the respective counting marker and the priority level markers related to each emitter identified by e.

When a value of a user data partial counter is received by the emitter protection unit 310 resulting from the sending from the receiver protection unit 312, the current value of the receiving user data counter UCR is updated by adding the received value of the user data partial counter.

In the step 428, similar steps as the steps 222, 224, 226 of Figure 4 are carried out but by the protection emitter unit 310.

If the last available received data is a last element of a group G(g, e), in the same step 428, the protection emitter unit 310 determines the total number of user data packets belonging to the set S(g, e) associated to the emitter 304 identified by e from the counting marker C(g, e).

Then, the protection emitter unit 310 calculates the difference between the current value of the receiving user data counter UCR and the total number of user data packets belonging to the set S(g, e). Then, in the same step 428, a test is performed on the sign of this difference.

When the difference is greater or equal to zero, the receiving user counter UCR is updated by inputting the calculated difference as the updated value of UCR, and the steps continues again by jumping to the step similar to step 214 of Figure 4.

When the difference is lower than zero, namely the current receiving user counter UCR is lower than the total number of user data packets belonging to the set S(g, e), a transmission problem is reported in a step 430.

If a continuity default is detected, activating of a switch over to a redundant transmission path is carried out in a step 412 similar to step 110 of Figure 2.

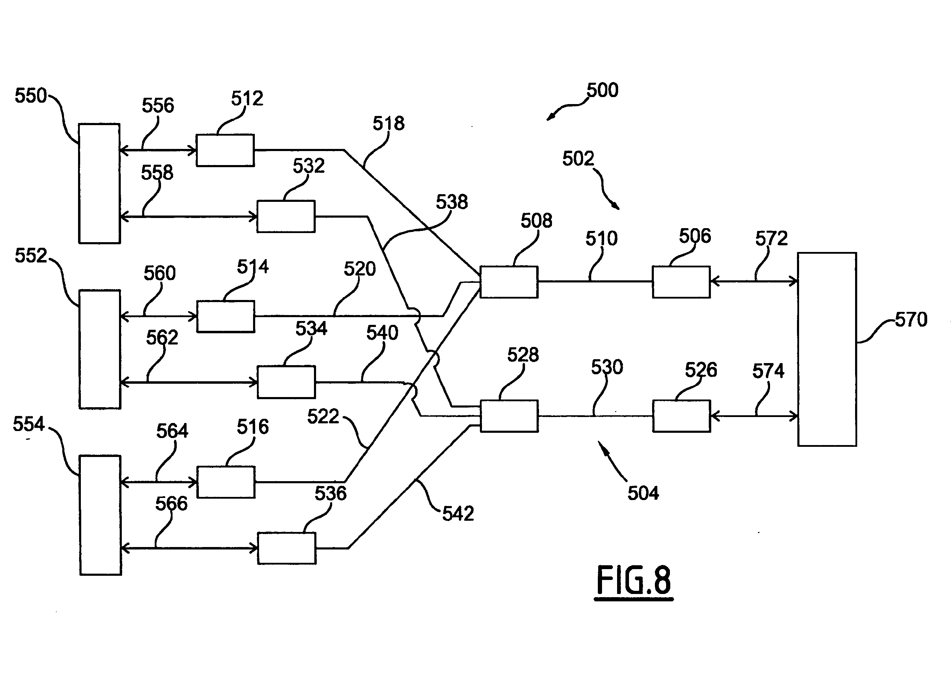

According to Figure 8, the transmission network is in particular a Passive Optical Network 500.

The Passive Optical Network 500 comprises two optical sub-networks 502, 504, a first optical sub-network 502 called working sub-network for nominally working, the second optical sub-network 504 called protection sub-network serving as redundant back up sub-network when a transmission default occurred on a fibre link of the working sub-network 502.

The Passive Optical Network 500 also comprises several protection units.

The working optical sub-network 502 comprises a working Optical Line Termination 506 (OLT) upwardly connected through a protection unit to a switch not shown in the Figure 8 and belonging to a high rate optical networking infrastructure not shown.

The working optical sub-network 502 also comprises a working optical splitter 508 upwardly connected to the working Optical Line Termination 506 (OLT) through a working dedicated optical fibre 510.

The working optical sub-network 502 also comprises several working Optical Network Units, here three 512, 514, 516, each one being located inside a different customer premise or user and being connected to the same working splitter 508 through respective dedicated fibres 518, 520, 522.

The first, second, third working Optical Network Units 512, 514, 516 respectively associated to a first, second, third user share the same optical fibre 510 from the working Optical Line termination 506 to the working splitter 508.

In the working sub-network 502, since the single fibre 510 is shared by the Optical Network Units 512, 514, 516 both for uplink (from the Optical Network Units to Optical Line termination) and downlink (from Optical Line Termination to Optical Network Units), uplink and downlink data are transmitted simultaneously using two distinct wavelengths of a laser. Such a downlink/uplink access scheme is referred as wavelength duplex access.

In the uplink direction, a time slot is allocated repeatedly to each user of a cluster, wherein transmission of data is enabled.

Time slots are configured into a frame in such a way to avoid simultaneous transmission which could collide. Such an uplink access scheme from the network terminals to the OLT is conventionally called a Time Division Multiplexing Access (TDMA).

The protection optical sub-network 504 comprises a protection Optical Line Termination 526 (OLT) also upwardly connected through a protection unit to a switch not shown in the Figure 8 and belonging to a high rate optical networking infrastructure.

The protection optical sub-network 504 also comprises a working optical splitter 528 upwardly connected to the working Optical Line Termination 526 (OLT) through a working dedicated optical fibre 530.

The protection optical sub-network 504 also comprises several protection Optical Network Units, here three 532, 534, 536, each one being respectively paired with one different working Optical Network Unit 512, 514, 516 and being connected to the same protection splitter 528 through respective dedicated fibres 538, 540, 542.

The first, second, third protection Optical Network Units 532, 534, 536 respectively associated to the first, second, third user share the same optical fibre 530 from the protection Optical Line termination 526 to the working splitter 528.

In uplink direction, each working Optical Network Unit 512, 514, 516 is considered as an emitter 4 of the Figure 1 whereas the working Optical Line termination 506 is considered as a receiver 6 of Figure 1.

In downlink direction, the working Optical Line Termination 506 is considered as an emitter 4, 304 of the Figure 1 and the Figure 5 whereas anyone among the working Optical Network Units 512, 514, 516 is considered as a receiver 6, 306 of the Figure 1 and the Figure 5.

ONUs' protection units 550, 552, 554 are connected to each Optical Network Unit 512, 532, 514, 534, 516, 536.

The first protection unit 550 is respectively connected to the first working Optical Network Unit 512 and to the first protection Optical Network Unit 532 though the bidirectional links 556 and 558.

The second protection unit 552 is respectively connected to the second working Optical Network Unit 514 and to the second protection Optical Network Unit 534 though the bidirectional links 560 and 562.

The third protection unit 554 is respectively connected to the third working Optical Network Unit 516 and to the third protection Optical Network Unit 536 though the bidirectional links 564 and 566.

An OLT's protection unit 570 is connected to the working Optical Line Termination 506 and to the protection Line Termination 526 through the bidirectional links 572, 574.

Each protection unit 550, 552, 554, 570 comprises a protection emitter unit and a protection receiver unit as defined in Figure 1 and Figure 2 able to carry out the steps for checking a default continuity of a fibre either in uplink direction or in downlink direction.

In downlink direction, each group G(g) comprises for each quality of service and for each receiver a corresponding quality of service marker. The number of quality of service markers of a group G(g) is therefore equal to the number of quality of service, for instance the number of priority level, multiplied by the number of receivers, here the number of Optical Network Units.

In uplink, all the markers have an assigned group identifier g and an emitter identifier e, here an Optical Network Unit identifier as the data issued from all the Optical Network Units are mixed in the transmission line connected to the corresponding Optical Line Termination.

In both directions, when only the markers of one Optical Network Unit are missing the defective physical link between a splitter and the Optical Network Unit can be identified.

When a problem has occurred between an Optical Line Termination and a splitter, all markers are missing.

If counter mismatch is detected, the location of the problem cannot be found exactly and all the users of the working sub-network are switched to the protection sub-network.

To achieve a quick protection reactivity, the markers are inserted regularly by using a minimum time period and/or a volume of user data already sent.

Advantageously, continuity checking steps are implemented and executed within a protection emitter unit and a protection receiver unit that are separated from within Optical Network Units and Optical Line Terminations and that are simply added to existing hardware and software.

## Claims

1. Method for preparing and transmitting a data frame in a transmission network (2; 302; 500) comprising an emitter (4; 304), a transmission line (8; 308) and a receiver (6; 306) connected in series,
wherein the method comprises the following steps consisting of subsequently:
providing (112) several predetermined sets (159) of subsequent data packets cut amongst data packets serially arranged (Q(i)), each set (159) being identified by a different group identifier (g), each set (159) being empty or formed by at least one packet (Q(i, g)), and each packet (Q(i,g)) of a same set (159) if any being associated to a Quality of Service (QoS(i)) among a set of at least two Quality of Service (QoS),
for each predetermined set (159),
providing a counting marker (182) for determining the number of data packets of the set (159) and for each Quality of Service (QoS) a different quality of service marker (184, 186,188),
forming (116) a group (168) of signalling elements comprising the counting marker (182) followed by the Quality of Service markers (182, 184, 186),
inputting the group (168) after the set (159),
transmitting a data frame comprising the user data packets (160, 162, 164) of the set (159) and all the signalling elements (182,184, 186, 188) of the group (168) through the transmission network (2; 302; 500) by gathering together the packets and the Quality of Service marker having a same quality of service (QoS) while keeping each Quality of Service marker after the corresponding user data packets if any having the same Quality of Service.

2. Method for preparing and transmitting a data frame according to claim 1, **characterized in that** the providing of several cut sets (159) depends on a period of time and/or a volume of data.

3. Method for preparing and transmitting a data frame according to claims 1 or 2, **characterized in that** each Quality of Service marker (184, 186, 188) contains a same group identifier (g).

4. Method for preparing and transmitting a data frame according to any of the claims 1 to 3, **characterized in that**
each Quality of Service (QoS) corresponds to a priority level (p), the highest priority level being equal to an integer (pmax) and the quality of service marker (M(QoS)) is a priority level marker (M(p)).

5. Method for preparing a data frame according to claim 1 and 4 **characterized in that** gathering is carried out by implementing queuing files with different priority levels (p).

6. Method for preparing and transmitting a data frame according to claim 5, **characterized in that** it comprises further the following steps consisting of subsequently:
transmitting (120) at the input of the queuing files the set (159) of user data packets followed by the group (168),
for each set (159) followed by its corresponding group (168),
for each level of priority (p) lower than or equal to the highest level of priority (pmax), inputting (124) into the respective queuing file (F(p)), the packets of the set (159) if any with the same priority (p) without changing their sequencing order exhibited at the input of the corresponding queuing files (F(p)) and lastly the corresponding priority level marker (M(p, g)),
inputting the counting marker (182),
multiplexing (126) the serially arranged data contained in the queuing files (F(p)) according to a decreasing order of the priority levels (p) by outputting subsequently into an emitter outputted data frame the data from ones corresponding to the highest priority level until the ones corresponding to the lowest priority level.

7. Method for checking continuity in a transmission network comprising an emitter (4; 304), a transmission line (8; 308) and a receiver (6; 306) connected in series and a receiving user counter (UCR), **characterized in that** it comprises the steps consisting of:
attempting to receive a data frame prepared and transmitted according to the method as defined in any of the claims 1 to 6,
counting user data packets of a data frame at receiver level by the receiving user counter (UCR) until all the Quality of Service markers (184, 186, 188) of a same group (168) have been received,
receiving a counting marker (182) of the same group (168),
comparing the counting value of the receiving counter (UCR) when all the Quality of Service markers (184, 186, 188) of the same group (168) have been received to the total number of packets contained in the counting marker (182),
when the receiving user counter value is higher than the total number of packets contained in the counting marker (182), the receiving user counter (UCR) value is updated by subtracting the total number of packets contained in the counting marker (182) to the counted value of the receiving user counter (UCR).

8. Method for checking continuity according to claim 7, **characterized in that** it comprises the step of reporting (234) a transmission problem when the receiving user counter value is lower than the total number of packets contained in the counting marker (182), ,

9. Method for checking continuity according to any of claims 7 to 8,
**characterized in that** the transmission network comprises an emitting user counter (UCE) and the method comprises
an initialization step (102) wherein before starting any transmission of data frame, the emitting user counter (UCE) and the receiving user counter (UCR) are set at same value,
a first loop (202) of steps (214, 218) wherein a current time elapsed since the last group (166) reception is compared with a predetermined timeout value (Tout),
a reporting step (216) wherein a transmission problem is indicated when the timeout has elapsed.

10. Method for checking continuity according to claim 9, **characterized in that** the checking continuity step (108) comprises
a second loop (204) embedding the first loop (202) and wherein a last element of a group (168) is searched, the last element being comprised in the set of the counting marker (182) and the Quality of Service markers (14, 186, 188),
a third loop (206) of steps embedding the second loop (204) and wherein the presence of a user data packet is searched,
a fourth loop (208) embedding the third loop (206) and wherein the number of user data packets received are counted by the receiving user counter (UCR).

11. Method for checking continuity according to claim 9, characterized and in that it comprises a step of:
sending back (408, 426) by a receiver protection unit to an emitter protection unit through the receiver and the emitter the counting marker, the quality of service markers previously transmitted by the emitter.

12. Method for checking continuity according to claim 11, **characterized in that** in the same step (408) the receiver protection unit (312) also sends to the emitter protection unit (310) all the user data packets.

13. Method for checking continuity according to claim 11, **characterized in that** it comprises the steps of
outputting from the receiver (306) to the receiver protection unit (312) in parallel to subunits (334, 336, 338) the data according to respective different parameters (θ1, θ2, θ3),
determining (426) separately by the protection receiver unit (312) the values of different user data partial counters (UCR(θ1), UCR(θ2), UCR(θ3)), by counting for each counter (UCR(θ1), UCR(θ2), UCR(θ3)), the number of user data packets received by the corresponding subunit (334, 336, 338) and related to the same parameter ((θ1, θ2, θ3) associated to the subunit (334, 336, 338),
when a quality of service marker has been received by a subunit, sending back by the receiver protection unit (312) to the emitter protection unit (310) the value reached by the user data partial counter associated to the subunit that has received the quality of service marker and resetting the associated user data partial counter to zero.

14. Method for checking continuity according to any of claims 7 to 13 **characterized in that** the transmission network (2, 302) is a Passive Optical Network (500), in an uplink direction the emitter (4, 304) is an Optical Network Unit (512, 532, 514, 534, 516, 536), the receiver (6, 306) is an Optical Line Termination (506, 526).

15. Method for checking continuity according to any of claims 7 to 13, **characterized in that** the transmission network (2, 302) is a Passive Optical Network (500), in a downlink direction, the receiver (6, 306) is an Optical Network Unit (512, 532, 514, 534, 516, 536) and the emitter (4, 304) is an Optical Line Termination (506, 526).

16. Transmission network comprising an emitter protection unit (10; 310), an emitter (4; 304), a transmission line (8; 308) and a receiver (6; 306) connected in series, wherein the emitter protection unit (10; 310) is able to provide several sets (159) of subsequent data packets cut amongst data packets serially arranged (Q(i)), each set (150) being empty or formed by at least one packet (Q(i, g)) and each packet (Q(i, g)) of a same set (159) being associated to a Quality of Service (QoS(i)) among a set of at least two Quality of Service (QoS),
the emitter protection unit (10, 310) is able, for each predetermined set (159),
to provide a counting marker (182) for determining the number of data packets of the set (159) and at least two Quality of Service markers (184, 186, 188) corresponding respectively to a different Quality of Service (QoS),
to form a group (168) of signalling elements comprising the counting marker (182) followed by the Quality of Service markers (184, 186, 188) and to input the group (168) after the set (159),
the emitter is able to transmit a frame comprising the user data packets (160, 162, 164) of the set (159) and the signalling elements (182,184, 186, 188) of the group (168) through the transmission network (2; 302; 500) by gathering together the packets and the quality of service marker having a same quality of service (QoS) while keeping each Quality of Service marker after the corresponding user data packets if any having the same Quality of Service.

17. Transmission network according to claim 16, **characterized in that** it also comprises a receiver (6; 306), connected to the transmission line (8; 308) and able to receive the data transmitted by the emitter (4; 304), and a protection receiver unit (12; 312) able to carry out the continuity checking as defined in claims 7 to 15.

18. Transmission network according to any of claims 16 to 17, **characterized in that** the transmission network (2, 302) is a Passive Optical Network (500), in uplink direction, the emitter (4; 304) is an Optical Network Unit (512, 532, 514, 534, 516, 536), the receiver (6; 306) is an Optical Line Termination (506; 526).

19. Transmission network according to any of claims 16 to 18 **characterized in that** the transmission network (2; 302) is a Passive Optical Network, in downlink direction, the receiver (6; 306) is an Optical Network Unit (512, 532, 514, 534, 516, 536) and the emitter (4; 304) is an Optical Line Termination (506; 526).

20. Computer program product comprising all the necessary code instructions to carry out the steps of the method as defined in any of the claims 1 to 15 when the instructions are executed by a processor.

## Patentansprüche

1. Verfahren zur Herstellung und zur Übermittlung eines Datenrahmens in einem Übermittlungsnetzwerk (2; 302; 500), welches einen Sender (4; 304), eine Übermittlungsleitung (8; 308) und einen Empfänger (6; 306) aufweist, die in Serie verbunden sind,
wobei das Verfahren die folgenden Schritte, in Reihenfolge, aufweist:
Bereitstellen (112) einiger vorbestimmter Sätze (159) von nachfolgenden Datenpaketen, welche aus Datapaketen, die seriell angeordnet sind [Q(i)), geschnitten sind, wobei jeder Satz (159) durch eine unterschiedlichen Gruppenkennung (g) identifiziert wird, jeder Satz (159) leer oder aus mindestens einem Paket (Q(i, g)) geformt ist, und jedes Paket (Q(i, g)) des gleichen Satzes (159), wenn vorhanden, assoziiert ist mit einer Service-Qualität (QoS(i)) aus einem Satz von mindestens zwei Service-Qualitäten (QoS),
für jeden vorbestimmten Satz (159),
Bereitstellen eines Zählmarkers (182), um die Anzahl von Datapaketen des Satzes (159) festzustellen, und für jede Service-Qualität (QoS) einen unterschiedlichen Service-Qualität-Marker (184, 186, 188),
Formen (116) einer Gruppe (168) von Signalelementen, die die Zählmarker (182) gefolgt von den Service-Qualität-Markern (184, 186, 188) aufweist,
Eingabe der Gruppe (168) nach dem Satz (159),
Übermitteln eines Datenrahmens, der die Benutzer-Datenpakete (160, 162, 164) des Satzes (159) und alle Signalelemente (182, 184, 186, 188) der Gruppe (168) aufweist, über das Übermittlungsnetzwerk (2; 302; 500) durch Zusammensammeln der Pakete und der Service-Qualität-Marker mit einer gleichen Service-Qualität (QoS), und gleichzeitigem Beibehalten jedes Service-Qualität-Markers nach den entsprechenden Benutzer Datenpaketen, wenn vorhanden, mit der gleichen Service-Qualität.

2. Verfahren zur Herstellung und zur Übermittlung eines Datenrahmens gemäß Anspruch 1, **dadurch gekennzeichnet, dass** das Bereitstellen einiger geschnittener Sätze (159) von einer Zeitperiode und/oder einem Datenvolumen abhängt.

3. Verfahren zur Herstellung und zur Übermittlung eines Datenrahmens gemäß Anspruch 1 oder 2, **dadurch gekennzeichnet, dass** in jedem Service-Qualität-Marker (184, 186, 188) eine gleiche Gruppenkennung (g) beinhaltet ist.

4. Verfahren zur Herstellung und zur Übermittlung eines Datenrahmens gemäß einem der Ansprüche 1 bis 3, **dadurch gekennzeichnet, dass**
jede Service-Qualität (QoS) einem Prioritätsniveau (p) entspricht, wobei das höchste Prioritätsniveau gleich einer ganzen Zahl (pmax) ist, und der Service-Qualität-Marker (M(QoS)) ein Prioritätsniveau-Marker (M(p)) ist.

5. Verfahren zur Herstellung und zur Übermittlung eines Datenrahmens gemäß Anspruch 1 und 4, **dadurch gekennzeichnet, dass** das Sammeln durch Implementieren von Queuingdateien mit unterschiedlichen Prioritätsniveaus (p) ausgeführt wird.

6. Verfahren zur Herstellung und zur Übermittlung eines Datenrahmens gemäß Anspruch 5, **dadurch gekennzeichnet, dass** es außerdem folgende Schritte, in Reihenfolge, aufweist:
Übermitteln (120), bei der Eingabe der Queuingdateien, des Satzes (159) von Benutzer-Datenpaketen gefolgt von der Gruppe (168),
für jeden Satz (159) gefolgt von seiner entsprechenden Gruppe (168),
für jedes Prioritätsniveau (p), welches kleiner oder gleich dem höchsten Prioritätsniveau (pmax) ist, Eingeben (124), in die jeweiligen Queuingdateien (F(p)), der Pakete des Satzes (159), wenn vorhanden, mit der gleichen Priorität (p), ohne ihre Sequenzordnung zu ändern, welche sie bei der Eingabe der entsprechenden Queuingdateien (F(p)) aufzeigten, und zuletzt des entsprechenden Prioritätsniveau-Markers (M(p, g)), Eingeben des Zählmarkers (182),
Multiplexen (126) der seriell angeordneten Daten, welche in den Queuingdateien (F(p)) beinhaltet sind, gemäß einer absteigenden Reihenfolge der Prioritätsniveaus (p) durch Ausgabe, in Reihenfolge, in einen vom Sender ausgegebenen Datenrahmen der Daten von solchen dem höchsten Prioritätsniveau entsprechenden bis zu solchen dem niedrigsten Prioritätsniveau entsprechenden.

7. Verfahren zur Kontrolle von Kontinuität in einem Übermittlungsnetzwerk, welches einen Sender (4; 304), eine Übermittlungsleitung (8; 308) und einen Empfänger (6; 306) aufweist, die in Serie verbunden sind, und einen Empfängerbenutzer-Zähler (UCR), **dadurch gekennzeichnet dass** es die Schritte aufweist, bestehend aus:
Versuchen, einen gemäß dem Verfahren, wie es in einem der Ansprüche 1 bis 6 definiert ist, hergestellten und übermittelten Datenrahmen zu empfangen,
Zählen von Benutzer-Datenpaketen eines Datenrahmens auf Empfänger-Ebene durch den Empfängerbenutzer-Zähler (UCR), bis alle Service-Qualität-Marker (184, 186, 188) einer gleichen Gruppe (168) empfangen worden sind,
Empfangen eines Zählmarkers (182) der gleichen Gruppe (168),
Vergleichen des Zählwerts des Empfänger-Zählers (UCR), wenn alle Service-Qualität-Marker (184, 186, 188) der gleichen Gruppe (168) empfangen worden sind, mit der Gesamtzahl der Pakete, welche in dem Zählmarker (182) beinhaltet ist,
wenn der Wert des Empfängerbenutzer-Zählers höher ist als die Gesamtzahl der Pakete, welche in dem Zählmarker (182) beinhaltet ist, wird der Empfängerbenutzer-Zähler (UCR) aktualisiert durch Subtrahieren der Gesamtzahl der Pakete, welche in dem Zählmarker (182) beinhaltet ist, zu dem gezählten Wert des Empfängerbenutzer-Zählers (UCR).

8. Verfahren zur Kontrolle von Kontinuität gemäß Anspruch 7, **dadurch gekennzeichnet, dass** es den Schritt des Berichtens (234) eines Transportproblems aufweist, wenn der Wert des Empfängerbenutzer-Zählers kleiner ist als die Gesamtzahl der Pakete, welche in dem Zählmarker (182) beinhaltet ist.

9. Verfahren zur Kontrolle von Kontinuität gemäß Anspruch 7 oder 8,
**dadurch gekennzeichnet, dass** das Übermittlungsnetzwerk einen Sendebenutzer-Zähler (UCE) aufweist und das Verfahren aufweist
einen Initialisierungsschritt (102), wobei, vor dem Starten irgendeiner Übermittlung eines Datenrahmens, der Senderbenutzer-Zähler (UCE) und der Empfängerbenutzer-Zähler (UCR) auf den gleichen Wert gesetzt werden,
eine erste Schleife (202) von Schritten (214, 218), wobei eine aktuelle Zeit, welche seit dem letzten Empfang einer Gruppe (166) verstrichen ist, mit einem vorbestimmten Auszeitwert (Tout) verglichen wird,
einen Bericht-Schritt (216), wobei ein Übermittlungsproblem angezeigt wird, wenn die Auszeit verstrichen ist.

10. Verfahren zur Kontrolle von Kontinuität gemäß Anspruch 9, **dadurch gekennzeichnet, dass** der Kontinuität-Kontrollschritt (108) aufweist
eine zweite Schleife (204), welche die erste Schleife (202) umschließt, und wobei ein letztes Element einer Gruppe (168) gesucht wird, welches in dem Satz des Zählmarkers (182) und der Service-Qualität-Marker (14, 186, 188) beinhaltet ist,
eine dritte Schleife (206) von Schritten, welche die zweite Schleife(204) umschließt, und wobei nach dem Vorhandensein eines Benutzer-Datenpakets gesucht wird,
eine vierte Schleife (208), welche die dritte Schleife (206) umschließt, und wobei die Anzahl von empfangenen Benutzer-Datenpaketen durch den Empfängerbenutzer-Zähler (UCR) gezählt wird.

11. Verfahren zur Kontrolle von Kontinuität gemäß Anspruch 9, **dadurch gekennzeichnet, dass** es eine Schritt aufweist des:
Rücksendens (408, 426) des Zählmarkers, der Service-Qualität-Marker, die vorher von dem Sender übermittelt wurden, von einer Empfänger-Schutzeinrichtung an eine Sender-Schutzeinrichtung durch den Empfänger und den Sender.

12. Verfahren zur Kontrolle von Kontinuität gemäß Anspruch 11, **dadurch gekennzeichnet, dass** in dem gleichen Schritt (408) die Empfänger-Schutzeinrichtung (312) auch alle Benutzer-Datenpakete an die Sender-Schutzeinrichtung (310) sendet.

13. Verfahren zur Kontrolle von Kontinuität gemäß Anspruch 11, **dadurch gekennzeichnet, dass** es die Schritte aufweist des:
Ausgebens der Daten gemäß jeweiliger unterschiedlicher Parameter (θ1, θ2, θ3) vom Empfänger (306) an die Empfänger Schutzeinrichtung (312) parallel an Untereinrichtungen (334, 336, 338),
Ermittelns (426), separat, durch die Empfänger Schutzeinrichtung (312) der Werte von verschiedenen Benutzerdaten-Teilzählern (UCR(θ1), UCR(θ2), UCR(θ3)), durch Zählen, für jeden Zähler (UCR(θ1), UCR(θ2), UCR(θ3)), der Anzahl von Benutzer-Datenpaketen, welche von der entsprechenden Untereinrichtung (334, 336, 338) empfangen wurden und im Zusammenhang mit dem gleichen Parameter (θ1, θ2, θ3), der assoziiert zu der Untereinrichtung (334, 336, 338) ist, stehen,
wenn ein Service-Qualität-Marker von einer Untereinrichtung empfangen worden ist, Zurücksendens von der Empfänger-Schutzeinrichtung (312) zu der Sender-Schutzeinrichtung des Wertes, der von dem Benutzerdaten-Teilzähler, welcher mit der Untereinrichtung assoziiert ist, die den Service-Qualität-Marker empfangen hat, erreicht wurde, und Zurückstellens des assoziierten Benutzerdaten-Teilzählers auf null.

14. Verfahren zur Kontrolle von Kontinuität gemäß einem der Ansprüche 7 bis 13, **dadurch gekennzeichnet, dass** das Übermittlungsnetzwerk (2, 302) ein passives optisches Netzwerk (500) ist, in einer Uplink-Richtung der Sender (4, 304) eine Optisches-Netzwerk-Einrichtung (512, 532, 514, 534, 516, 536) ist, der Empfänger (6, 306) eine optische Leitungsendstelle (506, 526) ist.

15. Verfahren zur Kontrolle von Kontinuität gemäß einem der Ansprüche 7 bis 13, **dadurch gekennzeichnet, dass** das Übermittlungsnetzwerk (2, 302) ein passives optisches Netzwerk (500) ist, in einer Downünk-Richtung der Empfänger (6, 306) eine Optisches-Netzwerk-Einrichtung (512, 532, 514, 534, 516, 536) ist und der Sender (4, 304) eine optische Leitungsendstelle (506, 526) ist.

16. Übermittlungsnetzwerk (2; 302; 500), welches eine Sender-Schutzeinrichtung (10, 310), einen Sender (4; 304), eine Übermittlungsleitung (8; 308) und einen Empfänger (6; 306) aufweist, die in Serie verbunden sind, wobei
die Sender-Schutzeinrichtung (10, 310) fähig ist, einige Sätze (159) von nachfolgenden Datenpaketen, welche aus Datapaketen, die seriell angeordnet sind (Q(i)), geschnitten sind, bereitzustellen, wobei jeder Satz (159) leer oder aus mindestens einem Paket (Q(i, g)) geformt ist und jedes Paket (Q(i, g)) des selben Satzes (159) assoziiert ist mit einer Service-Qualität (QoS(i)) aus einem Satz von mindestens zwei Service-Qualitäten (QoS),
die Sender-Schutzeinrichtung (10, 310) fähig ist, für jeden vorbestimmten Satz (159), zum Bereitstellen eines Zählmarkers (182), um die Anzahl von Datenpaketen des Satzes (159) festzustellen, und mindestens zweier Service-Qualität-Marker (184, 186, 188), jeweils entsprechend einer unterschiedlichen Service-Qualität (QoS),
zum Formen einer Gruppe (168) von Signalelementen, die den Zählmarker (182) gefolgt von den Service-Qualität-Markern (184, 186, 188) aufweist, und zur Eingabe der Gruppe (168) nach dem Satz (159),
der Sender fähig ist zum Übermitteln eines Rahmens, der die Benutzer-Datenpakete (160, 162, 164) des Satzes (159) und die Signalelemente (182, 184, 186, 188) der Gruppe (168) aufweist, über das Übermittlungsnetzwerk (2; 302; 500) durch Zusammensammeln der Pakete und der Service-Qualität-Marker mit einer gleichen Service-Qualität (QoS), und gleichzeitigem Beibehalten jedes Service-Qualität-Markers nach den entsprechenden Benutzer-Datenpaketen, wenn vorhanden, mit der gleichen Service-Qualität.

17. Übermittlungsnetzwerk gemäß Anspruch 16, **dadurch gekennzeichnet, dass** es außerdem einen Empfänger (6; 306) aufweist, verbunden mit der Übermittlungsleitung (8; 308) und fähig, die von dem Sender (4; 304) übermittelten Daten zu empfangen, und eine Empfänger-Schutzeinrichtung (12; 312), welche fähig ist, die Kontinuitätskontrolle, die in den Ansprüchen 7 bis 15 definiert ist, auszuführen.

18. Übermittlungsnetzwerk gemäß Anspruch 16 oder 17, **dadurch gekennzeichnet, dass** das Übermittlungsnetzwerk (2, 302) ein passives optisches Netzwerk (500) ist, in einer Uplink-Richtung der Sender (4, 304) eine Optisches-Netzwerk-Einrichtung (512, 532, 514, 534, 516, 536) ist, der Empfänger (6, 306) eine optische Leitungsendstelle (506, 526) ist.

19. Übermittlungsnetzwerk gemäß einem der Ansprüche 16 bis 18, **dadurch gekennzeichnet, dass** das Übermittlungsnetzwerk (2, 302) ein passives optisches Netzwerk (500) ist, in einer Downlink-Richtung der Empfänger (6, 306) eine Optisches-Netzwerk-Einrichtung (512, 532, 514, 534, 516, 536) ist und der Sender (4, 304) ist eine optische Leitungsendstelle (506, 526) ist.

20. Ein Computerprogramm Produkt, welches alle notwendigen Code-Anweisungen aufweist zum Ausführen der Schritte des Verfahrens, wie es in einem der Ansprüche 1 bis 15 definiert ist, wenn die Anweisungen durch einen Prozessor ausgeführt werden.

## Revendications

1. Procédé de préparation et transmission d'une trame de données dans un réseau de transmission (2 ; 302 ; 500) comprenant un émetteur (4 ; 304), une ligne de transmission (8 ; 308) et un récepteur (6 ; 306), connectés en série ;
dans lequel le procédé comprend les étapes ci-dessous consistant à subséquemment :
fournir (112) plusieurs ensembles prédéterminés (159) de paquets de données subséquents découpés parmi des paquets de données agencés en série (Q(i)), chaque ensemble (159) étant identifié par un identifiant de groupe distinct (g), chaque ensemble (159) étant vide ou formé d'au moins un paquet (Q(i, g)), et chaque paquet (Q(i, g)) d'un même ensemble (159), le cas échéant, étant associé à une qualité de service (QoS(i)) parmi un ensemble d'au moins deux qualités de service (QoS) ;
pour chaque ensemble prédéterminé (159) :
fournir un marqueur de comptage (182) destiné à déterminer le nombre de paquets de données de l'ensemble (159), et pour chaque qualité de service (QoS), un marqueur de qualité de service distinct (184, 186, 188) ;
former (116) un groupe (168) d'éléments de signalisation comprenant le marqueur de comptage (182) suivi des marqueurs de qualité de service (182, 184, 186) ;
introduire le groupe (168) après l'ensemble (159) ;
transmettre une trame de données comprenant les paquets de données utilisateur (160, 162, 164) de l'ensemble (159) et tous les éléments de signalisation (182, 184, 186, 188) du groupe (168) à travers le réseau de transmission (2 ; 302 ; 500), en regroupant les paquets et le marqueur de qualité de service présentant une même qualité de service (QoS), tout en conservant chaque marqueur de qualité de service après les paquets de données utilisateur correspondants, le cas échéant, présentant la même qualité de service.

2. Procédé de préparation et de transmission d'une trame de données selon la revendication 1, **caractérisé en ce que** la fourniture de plusieurs ensembles découpés (159) dépend d'une période de temps et/ou d'un volume de données.

3. Procédé de préparation et de transmission d'une trame de données selon la revendication 1 ou 2, **caractérisé en ce que** chaque marqueur de qualité de service (184, 186, 188) contient un même identifiant de groupe (g).

4. Procédé de préparation et de transmission d'une trame de données selon l'une quelconque des revendications 1 à 3, **caractérisé en ce que**
chaque qualité de service (QoS) correspond à un niveau de priorité (p), le niveau de priorité le plus élevé étant égal à un nombre entier (pmax) et le marqueur de qualité de service (M(QoS)) est un marqueur de niveau de priorité (M(p)).

5. Procédé de préparation d'une trame de données selon les revendications 1 et 4, **caractérisé en ce que** le regroupement est exécuté en mettant en oeuvre des files d'attente avec différents niveau de priorité (p).

6. Procédé de préparation et de transmission d'une trame de données selon la revendication 5, **caractérisé en ce qu'**il comprend en outre les étapes suivantes consistant à subséquemment :
transmettre (120) à l'entrée des files d'attente, l'ensemble (159) de paquets de données utilisateur suivi du groupe (168) ;
pour chaque ensemble (159) suivi de son groupe correspondant (168) ;
pour chaque niveau de priorité (p) inférieur ou égal au niveau de priorité le plus élevé (pmax), introduire (124) dans la file d'attente respective (F(p)), les paquets de l'ensemble (159), le cas échéant, ayant la même priorité (p), sans modifier leur ordre de séquençage indiqué à l'entrée des files d'attente correspondantes (F(p)), et en dernier lieu, le marqueur de niveau de priorité correspondant (M(p, g)) ;
introduire le marqueur de comptage (182) ;
multiplexer (126) les données agencées en série contenues dans les files d'attente (F(p)) selon un ordre décroissant des niveaux de priorité (p) en délivrant en sortie subséquemment, dans une trame de données générée en sortie par l'émetteur, les données provenant de celles correspondant au niveau de priorité le plus élevé jusqu'à celles correspondant au niveau de priorité le plus faible.

7. Procédé de vérification de continuité dans un réseau de transmission comprenant un émetteur (4 ; 304), une ligne de transmission (8 ; 308) et un récepteur (6 ; 306) connectés en série, et un compteur utilisateur de réception (UCR), **caractérisé en ce qu'**il comprend les étapes ci-dessous consistant à :
tenter de recevoir une trame de données préparée et transmise conformément au procédé selon l'une quelconque des revendications 1 à 6,
compter des paquets de données utilisateur d'une trame de données à niveau du récepteur, par le biais du compteur utilisateur de réception (UCR) jusqu'à ce que tous les marqueurs de qualité de service (184, 186, 188) d'un même groupe (168) aient été reçus ;
recevoir un marqueur de comptage (182) du même groupe (168) ;
comparer la valeur de comptage du compteur de réception (UCR) lorsque tous les marqueurs de qualité de service (184, 186, 188) du même groupe (168) ont été reçus, au nombre total de paquets contenus dans le marqueur de comptage (182) ;
lorsque la valeur de compteur utilisateur de réception est supérieure au nombre total de paquets contenus dans le marqueur de comptage (182), la valeur de compteur utilisateur de réception (UCR) est mise à jour en soustrayant le nombre total de paquets contenus dans le marqueur de comptage (182) de la valeur dénombrée du compteur utilisateur de réception (UCR).

8. Procédé de vérification de continuité selon la revendication 7, **caractérisé en ce qu'**il comprend l'étape consistant à signaler (234) un problème de transmission lorsque la valeur de compteur utilisateur de réception est inférieure au nombre total de paquets contenus dans le marqueur de comptage (182).

9. Procédé de vérification de continuité selon l'une quelconque des revendications 7 à 8,
**caractérisé en ce que** le réseau de transmission comprend un compteur utilisateur d'émission (UCE) et **en ce que** le procédé comprend
une étape d'initialisation (102), dans laquelle avant de commencer une transmission de trame de données, le compteur utilisateur d'émission (UCE) et le compteur utilisateur de réception (UCR) sont mis à la même valeur ;
une première boucle (202) d'étapes (214, 218), dans laquelle une durée en cours écoulée depuis la réception du dernier groupe (166) est comparée à une valeur de temporisation prédéterminée (Tout) ;
une étape de signalement (216) dans laquelle un problème de transmission est indiqué lorsque la temporisation est écoulée.

10. Procédé de vérification de continuité selon la revendication 9, **caractérisé en ce que** l'étape de vérification de continuité (108) comprend :
une deuxième boucle (204) intégrant la première boucle (202) et dans laquelle un dernier élément d'un groupe (168) est recherché, le dernier élément étant inclus dans l'ensemble du marqueur de comptage (182) et des marqueurs de qualité de service (14, 186, 188) ;
une troisième boucle (206) d'étapes intégrant la deuxième boucle (204) et dans laquelle la présence d'un paquet de données utilisateur est recherchée ;
une quatrième boucle (208) intégrant la troisième boucle (206) et dans laquelle le nombre de paquets de données utilisateur reçus est compté par le compteur utilisateur de réception (UCR).

11. Procédé de vérification de continuité selon la revendication 9, **caractérisé en ce qu'**il comprend une étape consistant à :
renvoyer (408, 426), par le biais d'une unité de protection de récepteur à une unité de protection d'émetteur, à travers le récepteur et l'émetteur, le marqueur de comptage et les marqueurs de qualité de service précédemment transmis par l'émetteur.

12. Procédé de vérification de continuité selon la revendication 11, **caractérisé en ce que**, au cours de la même étape (408), l'unité de protection de récepteur (312) envoie également à l'unité de protection d'émetteur (310), tous les paquets de données utilisateur.

13. Procédé de vérification de continuité selon la revendication 11, **caractérisé en ce qu'**il comprend les étapes ci-dessous consistant à :
générer en sortie, du récepteur (306) à l'unité de protection de récepteur (312), en parallèle à des sous-unités (334, 336, 338), les données selon des paramètres distincts respectifs (θ1, θ2, θ3) ;
déterminer (426), individuellement, par le biais de l'unité de protection de récepteur (312), les valeurs de différents compteurs partiels de données utilisateur (UCR(θ1), UCR(θ2), UCR(θ3)), en comptant, pour chaque compteur (UCR(θ1), UCR(θ2), UCR(θ3)), le nombre de paquets de données utilisateur reçus par la sous-unité correspondante (334, 336, 338) et connexes au même paramètre (θ1, θ2, θ3) associé à la sous-unité (334, 336, 338) ;
lorsqu'un marqueur de qualité de service a été reçu par une sous-unité, renvoyer, de l'unité de protection de récepteur (312) à l'unité de protection d'émetteur (310), la valeur atteinte par le compteur partiel de données utilisateur associé à la sous-unité qui a reçu le marqueur de qualité de service, et remettre à zéro le compteur partiel de données utilisateur associé.

14. Procédé de vérification de continuité selon l'une quelconque des revendications 7 à 13, **caractérisé en ce que** le réseau de transmission (2, 302) est un réseau optique passif (500), dans une direction de liaison montante, l'émetteur (4, 304) est une unité de réseau optique (512, 532, 514, 534, 516, 536), et le récepteur (6, 306) est une terminaison de ligne optique (506, 526).

15. Procédé de vérification de continuité selon l'une quelconque des revendications 7 à 13, **caractérisé en ce que** le réseau de transmission (2, 302) est un réseau optique passif (500), dans une direction de liaison descendante, le récepteur (6, 306) est une unité de réseau optique (512, 532, 514, 534, 516, 536), et l'émetteur (4, 304) est une terminaison de ligne optique (506, 526).

16. Réseau de transmission comprenant une unité de protection d'émetteur (10 ; 310), un émetteur (4 ; 304), une ligne de transmission (8 ; 308) et un récepteur (6 ; 306) connectés en série, dans lequel
l'unité de protection d'émetteur (10 ; 310) est apte à fournir plusieurs ensembles (159) de paquets de données subséquents découpés parmi des paquets de données agencés en série (Q(i)), chaque ensemble (150) étant vide ou formé d'au moins un paquet (Q(i, g)), et chaque paquet (Q(i, g)) d'un même ensemble (159) étant associé à une qualité de service (QoS(i)) parmi un ensemble d'au moins deux qualités de service (QoS) ;
l'unité de protection d'émetteur (10, 310) est apte à, pour chaque ensemble prédéterminé (159) :
fournir un marqueur de comptage (182) destiné à déterminer le nombre de paquets de données de l'ensemble (159), et au moins deux marqueurs de qualité de service (184, 186, 188) correspondant respectivement à une différente qualité de service (QoS) ;
former un groupe (168) d'éléments de signalisation comprenant le marqueur de comptage (182) suivi des marqueurs de qualité de service (182, 184, 186) et introduire le groupe (168) après l'ensemble (159) ;
l'émetteur est apte à transmettre une trame de données comprenant les paquets de données utilisateur (160, 162, 164) de l'ensemble (159) et tous les éléments de signalisation (182, 184, 186, 188) du groupe (168) à travers le réseau de transmission (2 ; 302 ; 500), en regroupant les paquets et le marqueur de qualité de service présentant une même qualité de service (QoS), tout en conservant chaque marqueur de qualité de service après les paquets de données utilisateur correspondants, le cas échéant, présentant la même qualité de service.

17. Réseau de transmission selon la revendication 16, **caractérisé en ce qu'**il comprend également un récepteur (6 ; 306), connecté à la ligne de transmission (8 ; 308) et apte à recevoir les données transmises par l'émetteur (4 ; 304), et une unité de protection de récepteur (12 ; 312) apte à mettre en oeuvre la vérification de continuité selon les revendications 7 à 15.

18. Réseau de transmission selon l'une quelconque des revendications 16 à 17, **caractérisé en ce que** le réseau de transmission (2 ; 302) est un réseau optique passif (500), dans la direction de liaison montante, l'émetteur (4 ; 304) est une unité de réseau optique (512, 532, 514, 534, 516, 536), et le récepteur (6 ; 306) est une terminaison de ligne optique (506 ; 526).

19. Réseau de transmission selon l'une quelconque des revendications 16 à 18, **caractérisé en ce que** le réseau de transmission (2 ; 302) est un réseau optique passif, dans la direction de liaison descendante, le récepteur (6 ; 306) est une unité de réseau optique (512, 532, 514, 534, 516, 536) et l'émetteur (4 ; 304) est une terminaison de ligne optique (506 ; 526).

20. Produit-programme informatique comprenant toutes les instructions de code nécessaires en vue de mettre en oeuvre les étapes du procédé selon l'une quelconque des revendications 1 à 15, lorsque les instructions sont exécutées par un processeur.
